# EUROPÄISCHE PATENTSCHRIFT

(11) **EP 2 658 341 B1**
(45) Veröffentlichungstag und Bekanntmachung des Hinweises auf die Patenterteilung: **05.10.2016**
(21) Anmeldenummer: 13163722.5
(22) Anmeldetag: 15.04.2013
(51) Int. Cl.: F24C 15/10, H05B 6/12

(54) **System mit einem Kochfeld und mit wenigstens einer abnehmbaren Kochfeldplatteneinheit**
System with a cooking plate and with at least one removable cooking plate
Système doté d'un champ de cuisson et d'au moins une unité de plaque de champ de cuisson amovible

(30) Priorität: 27.04.2012 ES 201230632
(43) Veröffentlichungstag der Anmeldung: 30.10.2013
(73) Patentinhaber: BSH Hausgeräte GmbH, 81739 München (DE)
(72) Erfinder: Almolda Fandos, Manuel, 50019 Zaragoza (ES); Bunuel Magdalena, Miguel Angel, 50017 Zaragoza (ES); Ceamanos Gaya, Jesús, 50016 Zaragoza (ES); Martin Gomez, Damaso, 20012 Zaragoza (ES); Ortiz Sainz, David, 50298 Pinseque (Zaragoza) (ES); Pina Gadea, Carmelo, 50008 Zaragoza (ES); Valencia Betran, María, 50010 Zaragoza (ES)

(56) Entgegenhaltungen:
- DE-A1-102008 007 191
- DE-A1-102008 041 926
- DE-U1- 20 302 542
- GB-A- 2 475 275
- GB-A- 2 483 232
- JP-A- 2008 022 895

## Beschreibung

Aus dem Stand der Technik sind Kochfelder mit fixierten und insbesondere werkzeuglos unlösbaren Abdeckplatten bekannt, welche in einer Einbaulage zu einem Aufstellen von Gargeschirr zu einer Durchführung eines Garvorgangs vorgesehen sind.

Aus der deutschen Offenlegungsschrift DE 10 2008 007 191 A1 ist ein Verfahren zum Erwärmen und Erhitzen eines Gefäßes auf einer Arbeitsplatte bekannt, unter der eine elektromagnetische Induktionsspule angeordnet ist. Um auch beliebige nicht-ferromagnetische Gefäße zum Beispiel auf einer Induktionskochplatte benutzen zu können, wird vorgeschlagen, dass zwischen dem Boden des Gefäßes und der Arbeitsplatte eine Zwischenplatte angeordnet wird, die zumindest teilweise aus ferromagnetischem Material besteht. Die hierzu benutzte Zwischenplatte kann schichtweise oder insgesamt aus ferromagnetischem Material bestehen und Teil eines mehrteiligen Satzes aus Zwischenplatten mit unterschiedlicher Größe oder Form sein.

Die britische Patentanmeldung GB 2475275 A offenbart eine von einer Kochfeldplatte, beispielsweise zu Reinigungszwecken, entfernbare Abdeckung. Die Abdeckung umfasst ein Blech mit Lücken oder Löchern, die in Größe, Lage und Form den Heizelementen und erhabenen Bereichen auf dem Köchfeld entsprechen, und weist Abmessungen auf, die einer oberen Fläche des Kochfelds entsprechen. Eine Herstellung der Abdeckung kann eine Ermittlung von Abmessungen des Kochfelds, beispielsweise aus einem Katalog und/oder einer Datenbank, eine Auswahl von Farbe und eines auf die Abdeckung zu druckenden Designs, eines auf die Abdeckung zu druckenden Musters oder einer auf die Abdeckung zu druckenden Abbildung, sowie ein Laserschneiden des Blechs umfassen. Das Blech kann aus feuerfestem Polypropylen bestehen und die Löcher können kreisförmig oder rechteckig sein.

Die deutsche Offenlegungsschrift DE 10 2008 041 926 A1 offenbart ein Kochgerät, insbesondere ein Kochfeld, mit einem Zierrahmen und einer Abdeckplatte, wobei die Abdeckplatte relativ bewegbar zum Zierrahmen angeordnet ist und eine Aufnahmevorrichtung mit einer Vertiefung vorgesehen ist, in welche die Abdeckplatte im gegenüber dem Zierrahmen angehobenen Zustand randseitig einsenkbar ist.

Aus der britischen Patentanmeldung GB 2483232 A ist eine abnehmbare waschbare Induktionskochfeld-Abdeckung bekannt, die ein laminiertes Blech mit einer Schicht aus Polytetrafluoroethylen und einer Schicht aus Silikon umfasst. In einigen Ausführungsbeispielen umfasst das Blech eine Zwischenschicht aus einem elektrisch isolierenden Material, beispielsweise aus einem flexiblen Glasfasergewebe oder aus einem mindestens 3 mm starken steifen Glasmaterial, Keramikmaterial oder Glaskeramikmaterial. Alternativ umfasst das Blech lediglich die Polytetrafluoroethylen-Schichten und Silikon-Schichten.

Aus der deutschen Gebrauchsmusterschrift DE 203 02 542 U1 ist eine Spritzschutzabdeckung für eine Kochmulde bekannt, welche Abdeckung in mehrere Einzelsegmente aufgeteilt ist, die voneinander trennbar ausgestaltet sind.

Die japanische Druckschrift JP 2008 022895 A offenbart einen Eisenplatten-Broiler. Der Eisenplatten-Broiler umfasst eine zum Anordnen von Nahrungsmitteln vorgesehene Eisenplatte, die bei einer vorgegebenen Curie-Temperatur oder höher nicht überhitzt werden soll und die mittels einer Legierung hergestellt ist, sowie einen Broiler-Körper, der ein für eine Induktionserwärmung der Eisenplatte vorgesehenes Induktionsheizmittel aufweist. Die Temperatur der Eisenplatte wird durch das Induktionsheizmittel kontrolliert.

Die Aufgabe der Erfindung besteht insbesondere darin, einen Bedienkomfort eines Kochfelds vorteilhaft zu steigern. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einem System mit einem Kochfelds, insbesondere einem Induktionskochfeld, welches eine Abdeckplatte aufweist, und mit wenigstens einer abnehmbaren Kochfeldplatteneinheit, welche dazu vorgesehen ist, zu einer Durchführung eines Garvorgangs auf die Abdeckplatte aufgelegt zu werden.

Es wird vorgeschlagen, dass das System eine Sicherheitsvorrichtung aufweist, die einen Betrieb eines Kochfelds nur dann ermöglicht, wenn wenigstens eine passende Kochfeldplatteneinheit auf die Abdeckplatte aufgelegt ist. Vorzugsweise umfasst das System zumindest zwei Kochfeldplatteneinheiten, welche dazu vorgesehen sind, zu einer Durchführung eines Garvorgangs nebeneinander auf die Abdeckplatte aufgelegt zu werden. Unter "vorgesehen" soll speziell ausgelegt und/oder ausgestattet verstanden werden. Unter einer "Abdeckplatte" soll in diesem Zusammenhang eine in einer Einbaulage des Kochfelds horizontal angeordnete Platteneinheit verstanden werden, welche das Kochfeld und insbesondere wenigstens eine Heizeinheit des Kochfelds in der Einbaulage insbesondere nach oben hin abdeckt und/oder begrenzt und welche insbesondere werkzeuglos unlösbar mit dem Kochfeld verbunden ist. Die Abdeckplatte kann auf eine beliebige, dem Fachmann als sinnvoll erscheinende Art befestigt sein, vorzugsweise jedoch durch eine Klebeverbindung, insbesondere mittels wenigstens eines Silikons und vorzugsweise an einem Montagerahmen des Kochfelds. Unter einer "Platteneinheit" soll eine Einheit verstanden werden, die eine Dicke aufweist, welche maximal 20 %, insbesondere maximal 15 %, vorteilhaft maximal 10 % und vorzugsweise maximal 5 % einer Länge und/oder einer Breite der Einheit entspricht. Vorzugsweise weist die Platteneinheit zumindest eine, vorzugsweise zumindest zwei, insbesondere einander gegenüberliegende, Seiten auf, die eine zumindest weitgehend ebene, insbesondere glatte, Oberfläche aufweisen. Unter einer "Kochfeldplatteneinheit" soll eine von einem Gargeschirr verschieden ausgebildete Einheit verstanden werden, welche wenigstens eine Platteneinheit aufweist. Vorzugsweise umfasst die Kochfeldplatteneinheit weitere Einheiten, insbesondere eine Griffeinheit und vorzugsweise wenigstens ein Element einer Halteeinheit zu einer Halterung der Kochfeldplatteneinheit an der Abdeckplatte. Darunter, dass die Kochfeldplatteneinheit "abnehmbar" ist, soll verstanden werden, dass die Kochfeldplatteneinheit durch einen Bediener demontierbar ist, und zwar insbesondere werkzeuglos. Vorzugsweise ist die Abdeckplatte durch den Bediener nach Überwindung einer Gewichtskraft der Kochfeldplatteneinheit und vorzugsweise einer zusätzlich wirkenden Haltekraft unmittelbar abnehmbar. Besonders vorteilhaft entspricht die Haltekraft höchstens der vierfachen, insbesondere maximal der dreifachen, vorzugsweise höchstens der doppelten und besonders vorteilhaft maximal der Gewichtskraft der Kochfeldplatteneinheit.

Darunter, dass die Kochfeldplatteneinheit dazu vorgesehen ist, "zu einer Durchführung eines Garvorgangs auf die Abdeckplatte aufgelegt zu werden", soll verstanden werden, dass die Kochfeldplatteneinheit bei einem Garvorgang derart auf die Abdeckplatte aufgelegt ist, dass eine Haupterstreckungsebene der Abdeckplatte und eine Haupterstreckungsebene der Platteneinheit der Kochfeldplatteneinheit zumindest im Wesentlichen parallel zueinander und zumindest im Wesentlichen horizontal angeordnet sind und die Kochfeldplatteneinheit wenigstens ein Gargut, insbesondere auch in einem auf die Kochfeldplatteneinheit aufgestellten Gargeschirr, trägt. Unter einer "Haupterstreckungsebene" einer Baueinheit soll eine Ebene verstanden werden, welche parallel zu einer größten Seitenfläche eines kleinsten geometrischen Quaders ist, welcher die Baueinheit gerade noch vollständig umschließt, und insbesondere durch den Mittelpunkt dieses Quaders verläuft. Darunter, dass die Haupterstreckungsebene der Abdeckplatte und die Haupterstreckungsebene der Platteneinheit der Kochfeldplatteneinheit "zumindest im Wesentlichen parallel zueinander" angeordnet sind, soll verstanden werden, dass die Haupterstreckungsebenen einen Winkel von höchstens 10°, insbesondere von maximal 5° und vorzugsweise von höchstens 1 ° einschließen. Darunter, dass die Haupterstreckungsebene der Abdeckplatte und die Haupterstreckungsebene der Platteneinheit der Kochfeldplatteneinheit "zumindest im Wesentlichen horizontal" angeordnet sind, soll verstanden werden, dass Normalen beider Haupterstreckungsebenen jeweils mit einer Schwerkraftrichtung einen Winkel von höchstens 10°, insbesondere von maximal 5° und vorzugsweise von höchstens 1 ° einschließen. Vorzugsweise beträgt ein minimaler Abstand zwischen der Abdeckplatte und der Platteneinheit der Kochfeldplatteneinheit in einem aufgelegten Zustand höchstens 10 mm, insbesondere maximal 5 mm, vorzugsweise höchstens 2 mm und besonders vorteilhaft maximal 1 mm.

Durch eine solche Ausgestaltung kann ein Bedienkomfort eines Kochfelds vorteilhaft gesteigert werden. Insbesondere kann ein Reinigungsaufwand reduziert werden, da eine Verschmutzung der Abdeckplatte zumindest weitgehend vermieden werden kann und die Kochfeldplatteneinheit separat und vorteilhaft bequem gereinigt werden kann. Ferner kann eine größere Designvielfalt erreicht werden, da verschiedenartige Kochfeldplatteneinheiten verwendet werden können, deren Optik insbesondere an eine Küchenausstattung angepasst sein kann oder spezielle Akzente setzen kann. So kann insbesondere unter Beibehaltung eines Kochfelds eine Produktpalette vorteilhaft erweitert werden. Ferner kann eine Vielzahl verschiedener Materialien für die Kochfeldplatteneinheit zum Einsatz kommen, deren Einsatz in einer fest installierten Kochfeldplatte eines Kochfelds unmöglich oder unvorteilhaft ist.

Vorteilhaft umfasst das System zumindest eine weitere abnehmbare Kochfeldplatteneinheit, welche dazu vorgesehen ist, zu einer Durchführung eines Garvorgangs neben und insbesondere unmittelbar neben die Kochfeldplatteneinheit auf die Abdeckplatte aufgelegt zu werden. Vorzugsweise weisen die Kochfeldplatteneinheit und die weitere Kochfeldplatteneinheit zumindest im Wesentlichen identische Flächenerstreckungen auf. Unter einer "Flächenerstreckung" einer Platteneinheit soll in diesem Zusammenhang ein Flächeninhalt einer senkrechten Projektion der Platteneinheit auf ihre Haupterstreckungsebene verstanden werden. Darunter, dass die Kochfeldplatteneinheit und die weitere Kochfeldplatteneinheit "zumindest im Wesentlichen identische" Flächenerstreckungen, aufweisen, soll verstanden werden, dass eine relative Abweichung der Flächenerstreckungen höchstens 10 %, insbesondere maximal 5 % und vorzugsweise höchstens 1 % beträgt. Vorzugsweise umfassen die Kochfeldplatteneinheit und die weitere Kochfeldplatteneinheit jeweils wenigstens eine Platteneinheit, deren Flächenerstreckung jeweils höchstens einer halben Flächenerstreckung der Abdeckplatte entspricht.

Besonders vorteilhaft entsprechen die Flächenerstreckungen der Platteneinheiten der Kochfeldplatteneinheiten zumindest im Wesentlichen der halben Flächenerstreckung der Abdeckplatte. Darunter, dass die Flächenerstreckungen der Platteneinheiten "zumindest im Wesentlichen der halben Flächenerstreckung der Abdeckplatte" entsprechen, soll verstanden werden, dass eine relative Abweichung der Flächenerstreckung der jeweiligen Platteneinheit von der halben Flächenerstreckung der Abdeckplatte höchstens 10 %, insbesondere maximal 5 % und vorzugsweise höchstens 1 % beträgt. Hierdurch kann ein Bedienkomfort weiter gesteigert werden, da zwei nebeneinander angeordnete Kochfeldplatteneinheiten verwendet werden können, welche insbesondere getrennt voneinander auswechselbar sind. Wenn einem System insbesondere mehr als zwei Kochfeldplatteneinheiten angehören, kann beispielsweise ein Paar von Kochfeldplatteneinheiten bei einem Garvorgang zum Einsatz kommen, während weitere, nicht verwendete Kochfeldplatteneinheiten gereinigt werden können. Durch eine Reduzierung der Flächenerstreckung der Kochfeldplatteneinheiten kann ein Reinigungsaufwand besonders vorteilhaft reduziert werden, da eine vereinfachte Handhabung während einer Reinigung erreicht werden kann. Ferner kann ein Einlegen der Kochfeldplatteneinheit in einer Reinigungsflüssigkeit und/oder eine Reinigung der Kochfeldplatteneinheit in einer Geschirrspülmaschine vorteilhaft ermöglicht werden.

Ferner wird vorgeschlagen, dass die Kochfeldplatteneinheit zumindest im Wesentlichen aus einem elektrisch isolierenden Material besteht. Darunter, dass die Kochfeldplatteneinheit "zumindest im Wesentlichen" aus einem elektrisch isolierenden Material besteht, soll verstanden werden, dass die Kochfeldplatteneinheit mit einem Massenanteil von wenigstens 50 %, insbesondere von mindestens 60 %, vorzugsweise von wenigstens 70 % und besonders vorteilhaft von zumindest 80 % aus einem elektrisch isolierenden Material besteht. Unter einem "elektrisch isolierenden Material" soll in diesem Zusammenhang ein Material verstanden werden, welches bei 20°C einen spezifischen elektrischen Widerstand von mindestens 10⁸ Ωm, insbesondere wenigstens 10¹⁰ Ωm und vorteilhaft zumindest 10¹² ΩM aufweist. Vorzugsweise weist das Material bei 20°C ferner eine höchstens um 0,1 und insbesondere maximal um 0,01 von 1 abweichende magnetische Permeabilitätszahl und/oder eine Wärmeleitfähigkeit von höchstens 5 W/m/K und vorzugsweise von maximal 1 W/m/K und/oder einen thermischen Längenausdehnungskoeffizienten von höchstens 10⁻⁵ 1/K, insbesondere von maximal 10⁻⁶ 1/K und vorzugsweise von höchstens 10⁻⁷ 1/K und/oder eine Temperaturresistenz von zumindest 200°C, insbesondere von wenigstens 250°C und vorzugsweise von mindestens 300°C und/oder eine Thermoschockbeständigkeit von zumindest 300 K auf. Darunter, dass das Material eine "Thermoschockbeständigkeit von zumindest 300 K aufweist", soll verstanden werden, dass das Material dazu ausgelegt ist, einer kurzzeitigen Temperaturschwankung von zumindest 300 K und insbesondere von wenigstens 400 K zu widerstehen. Unter einer "kurzzeitigen Temperaturschwankung" soll eine Temperaturschwankung mit einer Zeitdauer von höchstens 2 s, insbesondere von maximal 1 s, vorzugsweise von höchstens 0,5 und besonders vorteilhaft von maximal 0,1 s verstanden werden. Insbesondere ist die Kochfeldplatteneinheit und insbesondere die Platteneinheit der Kochfeldplatteneinheit in diesem Fall zu einem Aufstellen eines Gargeschirrs zu Garzwecken vorgesehen und weist vorzugsweise eine entsprechend hohe

Festigkeit und/oder Härte auf, um Kratzspuren und/oder Beschädigungen der Kochfeldplatteneinheit und insbesondere deren Platteneinheit durch Gargeschirr, insbesondere metallisches Gargeschirr, zumindest weitgehend zu vermeiden. Vorzugsweise handelt es sich bei dem Material um eine Glaskeramik. Vorzugsweise ist in diesem Fall ferner auf der Platteneinheit der Kochfeldplatteneinheit wenigstens eine Position der zumindest einen, in einer Einbaulage des Kochfelds unterhalb der Abdeckplatte angeordneten Heizeinheit markiert. Hierdurch kann eine vorteilhafte Verwendung der Kochfeldplatteneinheit mit einem Induktionskochfeld ermöglicht werden, insbesondere da die Kochfeldplatteneinheit durch von dem Induktionskochfeld erzeugte hochfrequente magnetische Wechselfelder lediglich in zu vernachlässigendem Maße aufgewärmt wird. Eine Energiedeposition während eines Garvorgangs kann somit vorteilhafterweise unmittelbar in einem auf die Kochfeldplatteneinheit aufgestellten, vorzugsweise ferromagnetischen Gargeschirr erfolgen.

In einer weiteren Ausgestaltung der Erfindung wird vorgeschlagen, dass die Kochfeldplatteneinheit zumindest teilweise und vorzugsweise zumindest im Wesentlichen aus einem induktiv beheizbaren Material besteht. Darunter, dass die Kochfeldplatteneinheit "zumindest im Wesentlichen" aus einem induktiv beheizbaren Material besteht, soll verstanden werden, dass die Kochfeldplatteneinheit mit einem Massenanteil von wenigstens 50 %, insbesondere von mindestens 60 %, vorzugsweise von wenigstens 70 % und besonders vorteilhaft von zumindest 80 % aus einem induktiv beheizbaren Material besteht. Unter einem "induktiv beheizbaren Material" soll in diesem Zusammenhang ein Material verstanden werden, welches durch induzierte Wirbelströme und/oder durch Ummagnetisierungseffekte innerhalb von höchstens 10 min, insbesondere von maximal 5 min und vorzugsweise von höchstens 2 min um wenigstens 75 K, insbesondere um zumindest 100 K und vorzugsweise um mindestens 125 K erwärmbar ist. Vorzugsweise handelt es sich bei dem induktiv beheizbaren Material um ein elektrisch leitfähiges und vorzugsweise ferromagnetisches Material, insbesondere um ein Metall und vorzugsweise um Eisen oder eine Eisenlegierung, vorzugsweise um einen Stahl. Unter einem "elektrisch leitfähigen Material" soll ein Material mit einem spezifischen elektrischen Widerstand von höchstens 10⁻⁶ Ωm und vorzugsweise von höchstens 5×10⁻⁷ Ωm bei 20°C verstanden werden. Insbesondere ist die Kochfeldplatteneinheit in diesem Fall zu einem unmittelbaren Auflegen von Gargut zu Garzwecken vorgesehen und bildet vorzugsweise zumindest teilweise eine Teppanyaki-Platte. Besonders vorteilhaft umfasst die Kochfeldplatteneinheit in diesem Fall eine insbesondere in einem Außenbereich der Kochfeldplatteneinheit angeordnete und vorzugsweise geschlossene Fett- und/oder Flüssigkeitsauffangrinne. Hierdurch kann ein Bedienkomfort besonders vorteilhaft gesteigert werden, da insbesondere weitere Möglichkeiten zur Gargutzubereitung eröffnet werden können.

In einer bevorzugten Ausgestaltung der Erfindung wird vorgeschlagen, dass das System zumindest eine Halteeinheit umfasst, welche dazu vorgesehen ist, die Kochfeldplatteneinheit an der Abdeckplatte in wenigstens einer zu einer Haupterstreckungsebene der Abdeckplatte parallelen Richtung zu fixieren. Die Halteeinheit kann insbesondere zumindest ein Element aufweisen, welches Teil des Kochfelds oder der Kochfeldplatteneinheit ist. Darunter, dass die Halteeinheit dazu vorgesehen ist, "die Kochfeldplatteneinheit an der Abdeckplatte in wenigstens einer zu einer Haupterstreckungsebene der Abdeckplatte parallelen Richtung zu fixieren", soll verstanden werden, dass die Halteeinheit in wenigstens einem Zustand, in welchem die Kochfeldplatteneinheit auf die Abdeckplatte aufgelegt ist und/oder an der Abdeckplatte fixiert ist, als Reaktion auf eine auf die Kochfeldplatteneinheit in die Richtung wirkende Kraft eine entgegen der Richtung auf die Kochfeldplatteneinheit wirkende Gegenkraft erzeugt, welche insbesondere eine reine Reibungskraft zwischen der Abdeckplatte und der Platteneinheit der Kochfeldplatteneinheit mit einer Gewichtskraft der Platteneinheit als einziger Normalkraftkomponente übersteigt. Hierdurch kann eine Betriebssicherheit vorteilhaft gesteigert werden. Insbesondere kann ein sicherer Halt der Kochfeldplatteneinheit auf der Abdeckplatte erreicht werden.

In einer besonders bevorzugten Ausgestaltung wird vorgeschlagen, dass die Halteeinheit zumindest eine Kraftschlusseinheit aufweist, welche dazu vorgesehen ist, die Kochfeldplatteneinheit mittels eines Kraftschlusses in wenigstens einer zur Haupterstreckungsebene der Abdeckplatte parallelen Richtung zu fixieren. Die Kraftschlusseinheit kann insbesondere zumindest ein Element aufweisen, welches Teil des Kochfelds oder der Kochfeldplatteneinheit ist. Darunter, dass das Kraftschlusselement dazu vorgesehen ist, "die Kochfeldplatteneinheit mittels eines Kraftschlusses in wenigstens einer zur Haupterstreckungsebene der Abdeckplatte parallelen Richtung zu fixieren", soll verstanden werden, dass die Halteeinheit in wenigstens einem Zustand, in welchem die Kochfeldplatteneinheit auf die Abdeckplatte aufgelegt ist und/oder an der Abdeckplatte fixiert ist, als Reaktion auf eine auf die Kochfeldplatteneinheit in die Richtung wirkende Kraft eine entgegen der Richtung auf die Kochfeldplatteneinheit wirkende und auf einer Haftreibung beruhende Gegenkraft erzeugt, welche insbesondere eine reine Reibungskraft zwischen der Abdeckplatte und der Platteneinheit der Kochfeldplatteneinheit mit der Gewichtskraft der Platteneinheit als einziger Normalkraftkomponente übersteigt. Die Kraftschlusseinheit ist insbesondere dazu vorgesehen, eine Haftreibungskraft zwischen der Abdeckplatte und der Platteneinheit der Kochfeldplatteneinheit zu vergrößern, indem ein Haftreibungskoeffizient und/oder eine gesamte Normalkraft gegenüber einem Fall vergrößert wird, in welchem eine reinen Haftreibung zwischen der Abdeckplatte und der Platteneinheit mit der Gewichtskraft der Platteneinhei- als einziger Normalkraftkomponente auftritt. Hierdurch kann eine besonders vorteilhafte und bedienerfreundliche Halteeinheit bereitgestellt werden.

Wenn die Kraftschlusseinheit zumindest ein Magnetelement umfasst, kann eine vorteilhaft hohe Normalkraft und damit einhergehend eine ausreichend hohe Haftreibungskraft erreicht werden. Unter einem "Magnetelement" soll in diesem Zusammenhang ein Element verstanden werden, welches in wenigstens einem Betriebszustand ein magnetisches Feld erzeugt. Das Magnetelement kann insbesondere Teil der Kochfeldplatteneinheit oder vorzugsweise Teil des Kochfelds sein. Vorzugsweise ist das Magnetelement als ein Permanentmagnet ausgebildet, welcher insbesondere Teil des Kochfelds ist und besonders vorteilhaft unterhalb der Abdeckplatte angeordnet ist.

Ferner wird vorgeschlagen, dass die Kraftschlusseinheit zumindest ein Reibschlusselement aufweist. Unter einem "Reibschlusselement" soll in diesem Zusammenhang ein Element verstanden werden, welches bei unmittelbarer Kontaktierung mit der Abdeckplatte und/oder der Platteneinheit der Kochfeldplatteneinheit einen größeren Haftreibungskoeffizienten aufweist als die Abdeckplatte bei unmittelbarer Kontaktierung mit der Platteneinheit. Das Reibschlusselement kann insbesondere Teil des Kochfelds oder vorzugsweise Teil der Kochfeldplatteneinheit sein. Vorzugsweise umfasst das Reibschlusselement wenigstens ein Elastomer. Hierdurch kann ein vorteilhaft hoher Haftreibungskoeffizient und damit einhergehend eine ausreichend hohe Haftreibungskraft erreicht werden. Vorteilhaft kann auf eine entsprechende Anpassung eines Kochfelds verzichtet werden, da die Kraftschlusseinheit in ihrer Gesamtheit in der Kochfeldplatteneinheit integriert werden kann.

Vorteilhaft umfasst das System zumindest eine Dichtungseinheit, welche dazu vorgesehen ist, ein Eindringen von Feuchtigkeit und/oder Schmutz in einen Bereich zwischen der Kochfeldplatteneinheit und der Abdeckplatte zumindest weitgehend zu vermeiden. Die Dichtungseinheit kann insbesondere zumindest ein Element aufweisen, welches Teil des Kochfelds oder der Kochfeldplatteneinheit ist. Insbesondere kann die Dichtungseinheit zumindest teilweise einstückig mit dem Reibschlusselement ausgebildet sein. Hierdurch kann ein Reinigungsaufwand besonders vorteilhaft reduziert werden.

Ferner werden jeweils eine Kochfeldplatteneinheit und ein Kochfeld, insbesondere ein Induktionskochfeld, eines erfindungsgemäßen Systems vorgeschlagen. Hierdurch kann ein Bedienkomfort eines Kochfelds vorteilhaft gesteigert werden. Insbesondere kann ein Reinigungsaufwand vorteilhaft reduziert werden.

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination.

Es zeigen:
- Fig. 1: ein System mit einem Kochfeld, welches eine Abdeckplatte umfasst, und mit drei Köchfeldplatteneinheiten, welche dazu vorgesehen sind, zu einer Durchführung eines Garvorgangs auf die Abdeckplatte aufgelegt zu werden, in einer isometrischen Draufsicht,
- Fig. 2: das System mit zwei auf die Abdeckplatte aufgelegten Kochfeldplatteneinheiten in einer ersten Betriebsvariante in einer isometrischen Draufsicht,
- Fig. 3: das System mit zwei auf die Abdeckplatte aufgelegten Kochfeldplatteneinheiten in einer zweiten Betriebsvariante in einer isometrischen Draufsicht,
- Fig. 4: einen Ausschnitt des Systems in einer isometrischen Seitendarstellung und
- Fig. 5: einen Ausschnitt eines weiteren Systems in einer isometrischen Seitendarstellung.

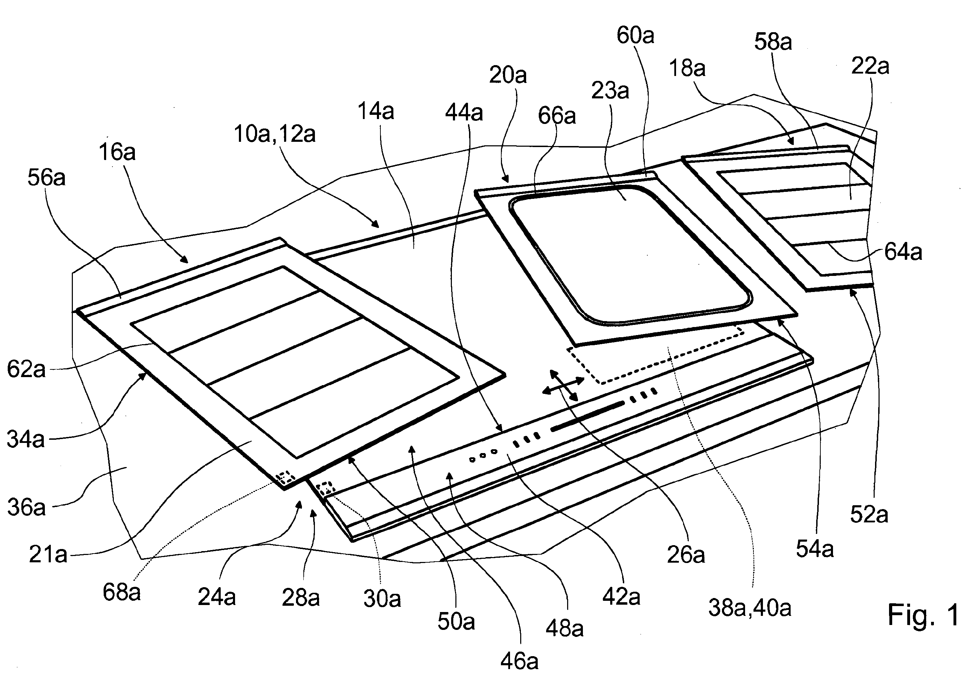

Figur 1 zeigt ein System mit einem in einem Ausschnitt einer Küchenarbeitsplatte 36a angeordneten Kochfeld 10a und drei Kochfeldplatteneinheiten 16a, 18a, 20a. Das Kochfeld 10a ist als ein Induktionskochfeld 12a ausgebildet. Das Kochfeld 10a weist eine Abdeckplatte 14a auf, welche in einer Einbaulage des Kochfelds 10a horizontal angeordnet ist. Die Abdeckplatte 14a besteht aus einer Glaskeramik. Die Abdeckplatte 14a weist eine Dicke von 4 mm auf. Durch die Abdeckplatte 14a werden Heizeinheiten 38a des Kochfelds 10a abgedeckt, wobei in Figur 1 lediglich eine der Heizeinheiten 38a gestrichelt eingezeichnet und bezeichnet ist. Das als Induktionskochfeld 12a ausgebildete Kochfeld 10a umfasst acht als Induktionsheizeinheiten 40a ausgebildete Heizeinheiten 38a. Die Heizeinheiten 38a sind matrixartig nebeneinander und unterhalb der Abdeckplatte 14a angeordnet. Alternativ ist auch denkbar, dass ein Kochfeld einen klassischen Heizzonenspiegel mit insbesondere vier unabhängig betreibbaren Heizzonen aufweist. Die Induktionsheizeinheiten 40a umfassen jeweils längliche Induktorspulen (nicht dargestellt) zu einer Erzeugung eines hochfrequenten magnetischen Wechselfelds. Das Kochfeld 10a umfasst ferner eine Bedienerschnittstelle 42a mit Bedien- und Anzeigeelementen zu einer Bedienung des Kochfelds 10a. Die Bedienerschnittstelle 42a ist in einem vorderen, einem Bediener zugewandten Bereich des Kochfelds 10a neben der Abdeckplatte 14a angeordnet. Die Bedienerschnittstelle 42a bildet eine Anlagekante 44a. Die Anlagekante 44a ist zumindest im Wesentlichen senkrecht zu einer Haupterstreckungsebene der Abdeckplatte 14a angeordnet. Im vorliegenden Fall entsteht die Anlagekante 44a durch eine gegenüber einer Oberfläche 46a der Abdeckplatte 14a erhöhte Oberfläche 48a der Bedienerschnittstelle 42a. Alternativ oder zusätzlich ist auch denkbar, dass eine Anlagekante durch ein separates Anlageelement gebildet ist.

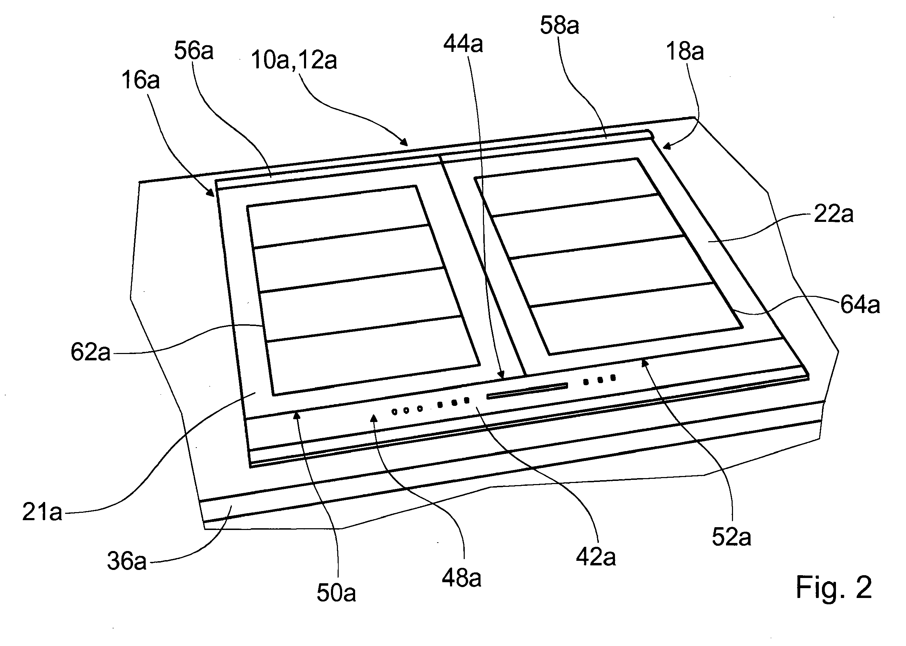

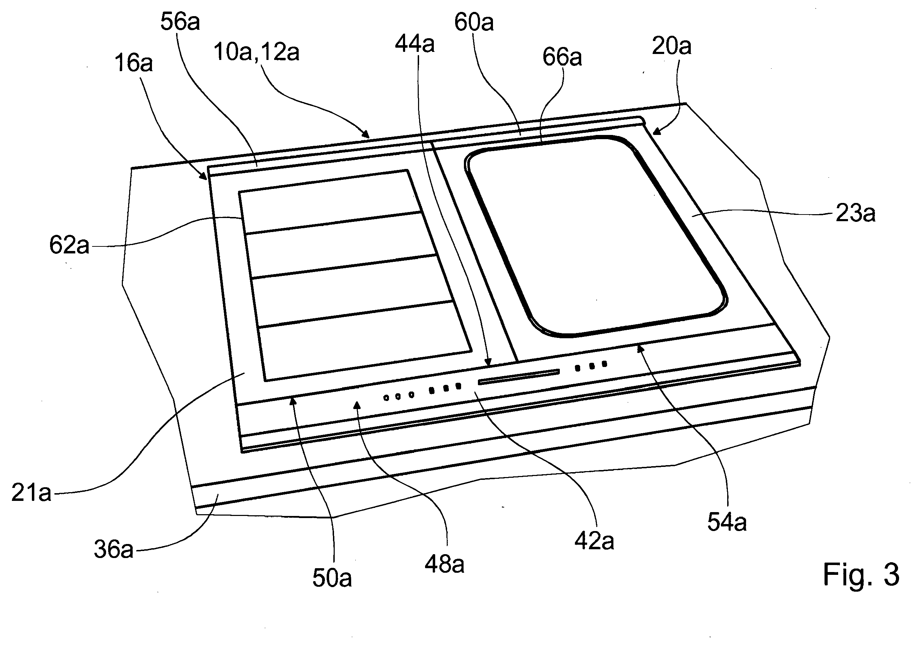

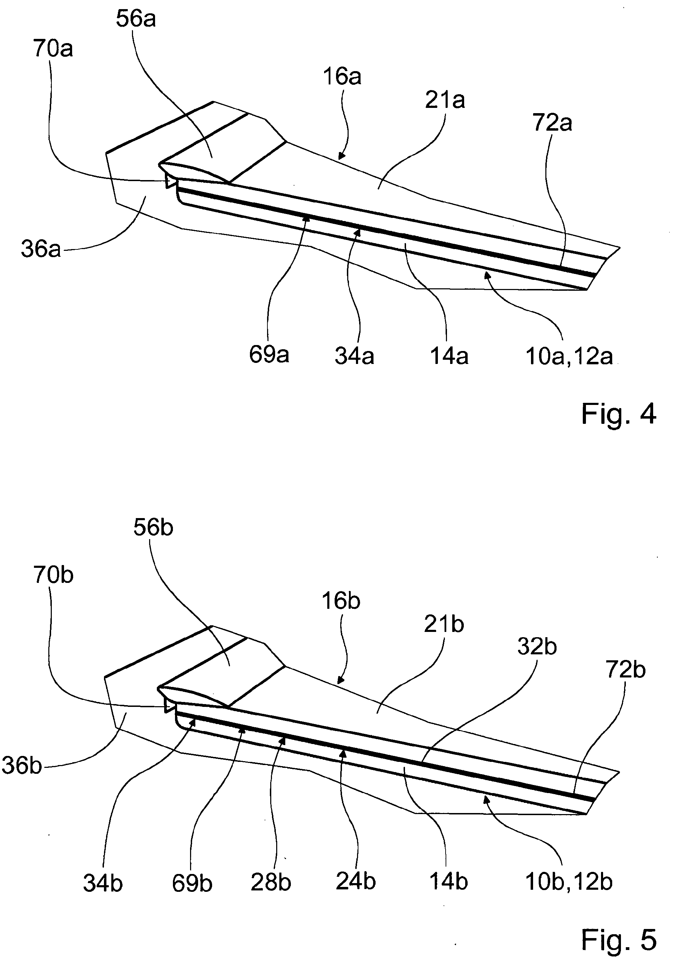

Die Kochfeldplatteneinheiten 16a, 18a, 20a sind dazu vorgesehen, zu einer Durchführung eines Garvorgangs auf die Abdeckplatte 14a aufgelegt zu werden (vgl. auch Figuren 2 und 3). Die Kochfeldplatteneinheiten 16a, 18a, 20a weisen jeweils eine Platteneinheit 21 a, 22a, 23a auf, deren Flächenerstreckung halb so groß ist wie eine Flächenerstreckung der Abdeckplatte 14a. Demzufolge können zwei der Kochfeldplatteneinheiten 16a, 18a 20a nebeneinander auf die Abdeckplatte 14a aufgelegt werden. Die Kochfeldplatteneinheiten 16a, 18a, 20a sind dazu vorgesehen, derart auf die Abdeckplatte 14a aufgelegt zu werden, dass die Platteneinheiten 21 a, 22a, 23a jeweils mit einer kleinsten Seitenfläche 50a, 52a, 54a an der Anlagekante 44a anliegen. Die Kochfeldplatteneinheiten 16a, 18a, 20a umfassen ferner jeweils ein Griffelement 56a, 58a, 60a (vgl. auch Figur 4), welches jeweils an einer der Seitenfläche 50a, 52a, 54a gegenüberliegenden Seitenfläche der Platteneinheit 21a, 22a, 23a angeordnet ist. Die Platteneinheiten 21a, 22a, 23a der Kochfeldplatteneinheiten 16a, 18a, 20a weisen jeweils eine maximale Dicke von 4 mm auf. Insbesondere kann vorgesehen sein, an einer Abdeckplatte eines Kochfelds einen Warnhinweis anzubringen, dass ein Aufstellen von Gargeschirr unmittelbar auf die Abdeckplatte vermieden werden sollte. In einer Weiterentwicklung dieses Gedankens ist ferner eine Sicherheitseinrichtung vorgesehen, die einen Betrieb eines Kochfelds nur dann ermöglicht, wenn wenigstens eine passende Kochfeldplatteneinheit auf eine Abdeckplatte aufgelegt ist.

Die Platteneinheit 21 a der Kochfeldplatteneinheit 16a besteht aus einer Glaskeramik. Die Kochfeldplatteneinheit 16a weist eine auf der Platteneinheit 21a angeordnete Markierung 62a auf, welche bei einer vorschriftsmäßigen Platzierung der Kochfeldplatteneinheit 16a auf der Abdeckplatte 14a Positionen der Heizeinheiten 38a kennzeichnet. Die Platteneinheit 22a der Kochfeldplatteneinheit 18a besteht ebenfalls aus einer Glaskeramik. Die Kochfeldplatteneinheit 18a weist eine auf der Platteneinheit 22a angeordnete Markierung 64a auf, welche bei einer vorschriftsmäßigen Platzierung der Kochfeldplatteneinheit 18a auf der Abdeckplatte 14a die Positionen der Heizeinheiten 38a kennzeichnet. Die Platteneinheiten 21a, 22a der Kochfeldplatteneinheiten 16a, 18a bestehen somit aus einem elektrisch isolierenden und zumindest im Wesentlichen magnetisch unpolarisierbaren Material, welches somit zumindest im Wesentlichen induktiv unbeheizbar ist. Die Platteneinheiten 21a, 22a sind zu einem Aufstellen von Gargut in einem vorzugsweise ferromagnetischen Gargeschirr zu Garzwecken vorgesehen (nicht dargestellt). Bei einem Betrieb einer der Induktionsheizeinheiten 40a findet eine Energiedeposition und damit einhergehend eine Erwärmung vornehmlich in dem aufgestellten Gargeschirr statt.

Die Platteneinheit 23a der Kochfeldplatteneinheit 20a besteht aus Eisen. Die Platteneinheit 23a besteht demzufolge aus einem ferromagnetischen und somit induktiv beheizbaren Material. Die Platteneinheit 23a weist eine Auffangrinne 66a für Fette und/oder Flüssigkeiten auf. Die Auffangrinne 66a ist geschlossen ausgebildet. Die Auffangrinne 66a ist in einem Außenbereich der Platteneinheit 23a angeordnet und umschließt einen Innenbereich. Die Platteneinheit 23a ist insbesondere im Innenbereich zu einem unmittelbaren Auflegen von Gargut zu Garzwecken vorgesehen (nicht dargestellt). Bei einem Betrieb einer der Induktionsheizeinheiten 40a und vorteilhaft aller von der Platteneinheit 23a abgedeckter Induktionsheizeinheiten 40a findet eine Energiedeposition und damit einhergehend eine Erwärmung vornehmlich in der Platteneinheit 23a statt. Die Platteneinheit 23a kann somit als eine Teppanyaki-Platte verwendet werden.

Figur 2 zeigt eine erste Betriebsvariante des Systems. In der ersten Betriebsvariante kommen lediglich die Kochfeldplatteneinheiten 16a, 18a mit den aus einer Glaskeramik bestehenden Platteneinheiten 21a, 22a zum Einsatz. Das System weist somit eine Funktionalität eines bekannten Kochfelds mit fester als Kochfeldplatte ausgebildeter Abdeckplatte auf. Da die Kochfeldplatteneinheiten 16a, 18a abnehmbar sind und insbesondere aufgrund ihrer Größe in eine Geschirrspülmaschine passen, kann vorteilhaft ein geringer Reinigungsaufwand erzielt werden. Es ist insbesondere auch denkbar, dass ein erfindungsgemäßes System mit unterschiedlich gestalteten Kochfeldplatteneinheiten, insbesondere mit unterschiedlich kolorierten Platteneinheiten und/oder unterschiedlich markierten Platteneinheiten und/oder mit Platteneinheiten unterschiedlichen Materials, erhältlich ist, wodurch vorzugsweise unter Beibehaltung eines einzigen Kochfelds eine Vielzahl von Systemen mit unterschiedlicher Optik ermöglicht werden kann.

Figur 3 zeigt eine zweite Betriebsvariante des Systems. In der zweiten Betriebsvariante kommen lediglich die Kochfeldplatteneinheit 16a mit der Platteneinheit 21a aus einer Glaskeramik und die Kochfeldplatteneinheit 20a mit der Platteneinheit 23a aus Eisen zum Einsatz. Das System weist somit sowohl eine Funktionalität eines bekannten Kochfelds mit fester als Kochfeldplatte ausgebildeter schmaler Abdeckplatte als auch eine Funktionalität einer Teppanyaki-Platte auf. Da die Kochfeldplatteneinheiten 16a, 20a abnehmbar sind und insbesondere aufgrund ihrer Größe in eine Geschirrspülmaschine passen, kann vorteilhaft ein geringer Reinigungsaufwand erzielt werden. Es ist insbesondere auch denkbar, dass ein System zwei Kochfeldplatteneinheiten mit einer Platteneinheit aus Eisen aufweist, so dass eine großflächige Teppanyaki-Platte erreicht werden kann. Ferner ist denkbar, dass ein System eine Kochfeldplatteneinheit mit einer Platteneinheit aus Eisen aufweist, deren Flächenerstreckung zumindest im Wesentlichen einer Flächenerstreckung einer Abdeckplatte eines Kochfelds des Systems entspricht.

Um einen sicheren Halt der Kochfeldplatteneinheiten 16a, 18a, 20a auf der Abdeckplatte 14a zu bewerkstelligen, umfasst das System eine Halteeinheit 24a, welche dazu vorgesehen ist, die Kochfeldplatteneinheiten 16a, 18a, 20a an der Abdeckplatte 14a in wenigstens einer zur Haupterstreckungsebene der Abdeckplatte 14a parallelen Richtung 26a zu fixieren (vgl. Figur 1). Die Halteeinheit 24a weist zumindest eine Kraftschlusseinheit 28a auf, welche dazu vorgesehen ist, die Kochfeldplatteneinheiten 16a, 18a, 20a mittels eines Kraftschlusses zu fixieren. Die Kraftschlusseinheit 28a umfasst Magnetelemente 30a, von denen in Figur 1 lediglich beispielhaft eines gestrichelt eingezeichnet und bezeichnet ist. Die Magnetelemente 30a sind Teil des Kochfelds 10a. Die Magnetelemente 30a sind in der Einbaulage unterhalb der Abdeckplatte 14a angeordnet. Die Magnetelemente 30a sind als Permanentmagnete ausgebildet. Das Kochfeld 10a weist acht Magnetelemente 30a auf. In jedem der vier Eckbereiche der Abdeckplatte 14a ist jeweils eines der Magnetelemente 30a angeordnet. Ferner sind in jedem mittleren Bereich der zwei längsten Kanten der Abdeckplatte 14a jeweils zwei Magnetelemente 30a entlang der jeweiligen längsten Kante nebeneinander angeordnet.

Die Kraftschlusseinheit 28a umfasst ferner Magnetelemente 68a, von denen in Figur 1 ebenfalls lediglich eines beispielhaft gestrichelt eingezeichnet und bezeichnet ist. Die Magnetelemente 68a sind Teil der Kochfeldplatteneinheiten 16a, 18a, 20a. Jede der Kochfeldplatteneinheiten 16a, 18a, 20a umfasst vier Magnetelemente 68a. Die Magnetelemente 68a sind jeweils in einem der vier Eckbereiche der Platteneinheiten 21a, 22a, 23a der Kochfeldplatteneinheiten 16a, 18a, 20a angeordnet. Die Magnetelemente 68a bestehen jeweils aus einem magnetisierbaren Material, vorzugsweise einem ferromagnetischen Material. Die Magnetelemente 68a sind jeweils an einer in einem aufgelegten Zustand der Abdeckplatte 14a zugewandten Unterseite 69a der Platteneinheiten 21a, 22a, 23a angeordnet. Die Magnetelemente 68a sind plättchenartig ausgebildet und weisen vorzugsweise eine Dicke von höchstens 1 mm auf. Bei einem Auflegen der Kochfeldplatteneinheiten 16a, 18a, 20a auf eine Hälfte der Abdeckplatte 14a kommt jedes der Magnetelemente 68a der Kochfeldplatteneinheiten 16a, 18a, 20a über einem der Magnetelemente 30a des Kochfelds 10a zu liegen. Die Magnetelemente 68a werden durch die Magnetelemente 30a angezogen, so dass eine über eine reine durch eine Gewichtskraft der Kochfeldplatteneinheiten 16a, 18a, 20a bedingte Haftreibungskraft hinausgehende Haltekraft auftritt. Im Falle einer Kochfeldplatteneinheit mit einer Platteneinheit aus einem induktiv beheizbaren Material kann auch auf eine Verwendung von separaten Magnetelementen aus einem magnetisierbaren Material verzichtet werden.

Figur 4 zeigt eine Detaildarstellung des betriebsbereiten Systems, in welcher eine Umgebung des Griffelements 56a der Kochfeldplatteneinheit 16a gezeigt ist. Die Griffelemente 56a, 58a, 60a aller Kochfeldplatteneinheiten 16a, 18a, 20a sind zueinander identisch ausgebildet. Die Griffelemente 56a, 58a, 60a sind als Griffleisten ausgebildet, welche sich jeweils entlang der gesamten angrenzenden Seitenfläche der Platteneinheiten 21a, 22a, 23a erstrecken. Die Griffelemente 56a, 58a, 60a bestehen vorzugsweise aus Aluminium. Alternativ ist jedoch auch jedes beliebige andere, dem Fachmann als sinnvoll erscheinende Material für die Griffelemente 56a, 58a, 60a denkbar, insbesondere ein Material mit einer Temperaturbeständigkeit von wenigstens 150°C und einer geringeren Wärmeleitfähigkeit als Aluminium, vorzugsweise ein temperaturbeständiger Kunststoff. Die Griffelemente 56a, 58a, 60a sind jeweils einstückig ausgebildet. Die Griffelemente 56a, 58a, 60a sind jeweils stoffschlüssig mit der entsprechenden Platteneinheit 21a, 22a, 23a verbunden. Die Griffelemente 56a, 58a 60a weisen jeweils einen Fingerschutz 70a auf, welcher einer versehentlichen Berührung der jeweiligen potentiell heißen Platteneinheit 21a, 22a, 23a vorbeugen soll. Der Fingerschutz 70a ist jeweils wandartig ausgebildet und verläuft entlang des gesamten jeweiligen Griffelements 56a, 58a, 60a.

Um ein Eindringen von Feuchtigkeit und/oder Schmutz in einen Bereich zwischen den Kochfeldplatteneinheiten 16a, 18a, 20a und der Abdeckplatte 14a zumindest weitgehend zu vermeiden, umfasst das System Dichtungseinheiten 34a. Die Dichtungseinheiten 34a sind Teil der Kochfeldplatteneinheiten 16a, 18a, 20a. Jede Kochfeldplatteneinheit 16a, 18a, 20a umfasst eine Dichtungseinheit 34a, welche ein bandartiges Dichtungselement 72a aufweist. Die Dichtungselemente 72a sind in sich geschlossen ausgebildet. Die Dichtungselemente 72a sind jeweils an der im aufgelegten Zustand der Abdeckplatte 14a zugewandten Unterseite 69a der Platteneinheiten 21a, 22a, 23a angeordnet. Die Dichtungselemente 72a sind jeweils entlang eines Randbereichs an der Unterseite 69a der jeweiligen Platteneinheit 21a, 22a, 23a angeordnet. Als Dichtungselemente 72a kommen beliebige, dem Fachmann als sinnvoll erscheinende Dichtungselemente 72a mit einer Temperaturbeständigkeit von wenigstens 250°C in Frage, die vorzugsweise zusätzlich lebensmittelverträglich und besonders vorteilhaft geschirrspülmaschinengeeignet sind. Im aufgelegten Zustand der Kochfeldplatteneinheiten 16a, 18a, 20a werden die Dichtungselemente 72a durch die Gewichtskraft der Kochfeldplatteneinheiten 16a, 18a, 20a und zusätzlich durch eine von den Magnetelementen 30a auf die Magnetelemente 68a wirkende Magnetkraft zusammengepresst. Eine Dicke der Platteneinheiten 21a, 22a, 23a zuzüglich einer Dicke der zusammengepressten Dichtungselemente 72a entspricht zumindest im Wesentlichen einer Höhendifferenz der Oberflächen 46a, 48a, so dass im aufgelegten Zustand der Kochfeldplatteneinheiten 16a, 18a, 20a eine bündige Oberfläche erreicht werden kann.

In der Figur 5 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figuren 1 bis 4 verwiesen werden kann. Zur Unterscheidung der Ausführungsbeispiele ist der Buchstabe a in den Bezugszeichen des Ausführungsbeispiels in den Figuren 1 bis 4 durch den Buchstaben b in den Bezugszeichen des Ausführungsbeispiels der Figur 5 ersetzt. Bezüglich gleich bezeichneter Bauteile, insbesondere in Bezug auf Bauteile mit gleichen Bezugszeichen, kann grundsätzlich auch auf die Figuren und/oder die Beschreibung des Ausführungsbeispiels der Figuren 1 bis 4 verwiesen werden.

Figur 5 zeigt eine Detaildarstellung eines alternativen Systems, in welcher eine Umgebung eines Griffelements 56b einer Kochfeldplatteneinheit 16b gezeigt ist. Im Gegensatz zum vorhergehenden Ausführungsbeispiel umfasst eine Kraftschlusseinheit 28b anstatt Magnetelementen Reibschlusselemente 32b. Die Reibschlusselemente 32b sind Teil von Kochfeldplatteneinheiten 16b, 18b, 20b. Jede Kochfeldplatteneinheit 16b, 18b, 20b umfasst ein Reibschlusselement 32b, welches dazu vorgesehen ist, eine Reibung zwischen Platteneinheiten 21b, 22b, 23b und einer Abdeckplatte 14b eines Kochfelds 10b zu vergrößern. Die Reibschlusselemente 32b sind jeweils einstückig mit einem Dichtungselement 72b einer Dichtungseinheit 34b der jeweiligen Kochfeldplatteneinheit 16b, 18b, 20b ausgebildet. Alternativ oder zusätzlich können auch separate, insbesondere von einem Dichtungselement verschieden ausgebildete Reibschlusselemente vorgesehen sein, welche vorzugsweise aus einem Elastomer bestehen.

In einer weiteren Ausgestaltung der Erfindung kann vorgesehen sein, dass eine Kochfeldplatteneinheit wenigstens ein Wärmeleitelement umfasst, welches eine Wärmebrücke zwischen einer Unterseite und einer Oberseite einer Platteneinheit der Kochfeldplatteneinheit bereitstellt. Mittels dieser Wärmebrücke kann eine Zuverlässigkeit einer Temperaturmessung durch einen insbesondere unterhalb einer Abdeckplatte angeordneten Temperatursensor gesteigert werden. Insbesondere kann das Wärmeleitelement dazu vorgesehen sein, insbesondere durch eine intrinsische Elastizität, die Abdeckplatte unmittelbar zu kontaktieren.

**Bezugszeichen**

| | | | |
|---|---|---|---|
| 10 | Kochfeld | 60 | Griffelement |
| 12 | Induktionskochfeld | 62 | Markierung |
| 14 | Abdeckplatte | 64 | Markierung |
| 16 | Kochfeldplatteneinheit | 66 | Auffangrinne |
| 18 | Kochfeldplatteneinheit | 68 | Magnetelement |
| 20 | Kochfeldplatteneinheit | 69 | Unterseite |
| 21 | Platteneinheit | 70 | Fingerschutz |
| 22 | Platteneinheit | 72 | Dichtungselement |
| 23 | Platteneinheit | | |
| 24 | Halteeinheit | | |
| 26 | Richtung | | |
| 28 | Kraftschlusseinheit | | |
| 30 | Magnetelement | | |
| 32 | Reibschlusselement | | |
| 34 | Dichtungseinheit | | |
| 36 | Küchenarbeitsplatte | | |
| 38 | Heizeinheit | | |
| 40 | Induktionsheizeinheit | | |
| 42 | Bedienerschnittstelle | | |
| 44 | Anlagekante | | |
| 46 | Oberfläche | | |
| 48 | Oberfläche | | |
| 50 | Seitenfläche | | |
| 52 | Seitenfläche | | |
| 54 | Seitenfläche | | |
| 56 | Griffelement | | |
| 58 | Griffelement | | |

## Patentansprüche

1. System mit einem Kochfeld (10a; 10b) welches eine Abdeckplatte (14a; 14b) aufweist, und mit wenigstens einer abnehmbaren Kochfeldplatteneinheit (16a; 16b), welche dazu vorgesehen ist, zu einer Durchführung eines Garvorgangs auf die Abdeckplatte (14a; 14b) aufgelegt zu werden, **gekennzeichnet durch** eine Sicherheitsvorrichtung, die einen Betrieb eines Kochfelds (10a, 10b) nur dann ermöglicht, wenn wenigstens eine passende Kochfeldplatteneinheit (16a, 16b) auf die Abdeckplatte (14a, 14b) aufgelegt ist.

2. System nach Anspruch 1, **gekennzeichnet durch** zumindest eine weitere abnehmbare Kochfeldplatteneinheit (18a, 20a; 18b, 20b), welche dazu vorgesehen ist, zu einer Durchführung eines Garvorgangs neben die Kochfeldplatteneinheit (16a; 16b) auf die Abdeckplatte (14a; 14b) aufgelegt zu werden.

3. System nach Anspruch 1 oder 2, **dadurch gekennzeichnet, dass** die Kochfeldplatteneinheit (16a, 18a, 20a; 16b, 18b, 20b) zumindest im Wesentlichen aus einem elektrisch isolierenden Material besteht.

4. System nach einem der vorhergehenden Ansprüche, **dadurch gekennzeichnet, dass** die Kochfeldplatteneinheit (16a, 18a, 20a; 16b, 18b, 20b) zumindest teilweise aus einem induktiv beheizbaren Material besteht.

5. System nach einem der vorhergehenden Ansprüche, **gekennzeichnet durch** zumindest eine Halteeinheit (24a; 24b), welche dazu vorgesehen ist, die Kochfeldplatteneinheit (16a, 18a, 20a; 16b, 18b, 20b) an der Abdeckplatte (14a; 14b) in wenigstens einer zu einer Haupterstreckungsebene der Abdeckplatte (14a; 14b) parallelen Richtung (26a; 26b) zu fixieren.

6. System nach Anspruch 5, **dadurch gekennzeichnet, dass** die Halteeinheit (24a; 24b) zumindest eine Kraftschlusseinheit (28a; 28b) aufweist, welche dazu vorgesehen ist, die Kochfeldplatteneinheit (16a, 18a, 20a; 16b, 18b, 20b) mittels eines Kraftschlusses in wenigstens einer zur Haupterstreckungsebene der Abdeckplatte (14a; 14b) parallelen Richtung (26a; 26b) zu fixieren.

7. System nach Anspruch 6, **dadurch gekennzeichnet, dass** die Kraftschlusseinheit (28a) zumindest ein Magnetelement (30a) umfasst.

8. System nach Anspruch 6 oder 7, **dadurch gekennzeichnet, dass** die Kraftschlusseinheit (28b) zumindest ein Reibschlusselement (32b) aufweist.

9. System nach einem der vorhergehenden Ansprüche, **gekennzeichnet durch** zumindest eine Dichtungseinheit (34a; 34b), welche dazu vorgesehen ist, ein Eindringen von Feuchtigkeit und/oder Schmutz in einen Bereich zwischen der Kochfeldplatteneinheit (16a, 18a, 20a; 16b, 18b, 20b) und der Abdeckplatte (14a; 14b) zumindest weitgehend zu vermeiden.

10. Kochfeld (10a; 10b) eines Systems nach einem der Ansprüche 1 bis 9.

## Claims

1. System with a cooking plate (10a; 10b), which has a cover plate (14a; 14b) and with at least one removable cooking plate unit (16a; 16b), which is provided to be placed on the cover plate (14a; 14b) in order to perform a cooking process, **characterised by** a safety apparatus, which only then permits operation of a cooking plate (10a, 10b) if at least one suitable cooking plate unit (16a, 16b) is placed on the cover plate (14a, 14b).

2. System according to claim 1, **characterised by** at least one further removable cooking plate unit (18a, 20a; 18b, 20b), which is provided to be placed adjacent to the cooking plate unit (16a; 16b) on the cover plate (14a; 14b) in order to perform a cooking process.

3. System according to claim 1 or 2, **characterised in that** the cooking plate unit (16a, 18a, 20a; 16b, 18b, 20b) consists at least substantially of an electrically insulating material.

4. System according to one of the preceding claims, **characterised in that** the cooking plate unit (16a, 18a, 20a; 16b, 18b, 20b) consists at least partially of an inductively heatable material.

5. System according to one of the preceding claims, **characterised by** at least one holding unit (24a, 24b), which is provided to fix the cooking plate unit (16a, 18a, 20a; 16b, 18b, 20b) on the cover plate (14a; 14b) in at least one direction (26a; 26b) which is parallel to a main extending plane of the cover plate (14a; 14b).

6. System according to claim **5, characterised in that** the holding unit (24a; 24b) has at least one force-fit unit (28a; 28b), which is provided to fix the cooking plate unit (16a, 18a, 20a; 16b, 18b, 20b) by means of a force fit in at least one direction (26a; 26b) which is parallel to the main extending plane of the cover plate (14a; 14b).

7. System according to claim 6, **characterised in that** the force-fit unit (28a) comprises at least one magnet element (30a).

8. System according to claim 6 or 7, **characterised in that** the force-fit unit (28b) has at least one friction locking element (32b).

9. System according to one of the preceding claims, **characterised by** at least one sealing unit (34a, 34b), which is provided to at least largely avoid moisture and/or dirt from penetrating into an area between the cooking plate unit (16a, 18a, 20a; 16b, 18b, 20b) and the cover plate (14a; 14b).

10. Cooking plate (10a; 10b) of a system according to one of claims 1 to 9.

## Revendications

1. Système comprenant une plaque de cuisson (10a ; 10b) qui présente une plaque de recouvrement (14a ; 14b), et comprenant au moins une unité de plaque de cuisson (16a ; 16b) amovible, laquelle est ménagée pour être posée sur la plaque de recouvrement (14a ; 14b) pour une réalisation d'une opération de cuisson, **caractérisé par** un dispositif de sécurité qui permet un fonctionnement d'une plaque de cuisson (10a, 10b) seulement lorsqu'au moins une unité de plaque de cuisson appropriée (16a, 16b) est posée sur la plaque de recouvrement (14a, 14b).

2. Système selon la revendication 1, **caractérisé par** au moins une unité de plaque de cuisson (18a, 20a ; 18b, 20b) amovible supplémentaire, laquelle est ménagée pour être posée sur la plaque de recouvrement (14a ; 14b) à côté de l'unité de plaque de cuisson (16a ; 16b) pour une réalisation d'une opération de cuisson.

3. Système selon la revendication 1 ou 2, **caractérisé en ce que** l'unité de plaque de cuisson (16a, 18a, 20a ; 16b, 18b, 20b) est constituée au moins essentiellement d'un matériau électriquement isolant.

4. Système selon l'une quelconque des revendications précédentes, **caractérisé en ce que** l'unité de plaque de cuisson (16a, 18a, 20a ; 16b, 18b, 20b) est constituée au moins en partie d'un matériau pouvant être chauffé de manière inductive.

5. Système selon l'une quelconque des revendications précédentes, **caractérisé par** au moins une unité de maintien (24a ; 24b) laquelle est ménagée pour fixer l'unité de plaque de cuisson (16a, 18a, 20a ; 16b, 18b, 20b) sur la plaque de recouvrement (14a ; 14b) dans au moins une direction (26a ; 26b) parallèle à un plan d'étendue principal de la plaque de recouvrement (14a ; 14b).

6. Système selon la revendication 5, **caractérisé en ce que** l'unité de maintien (24a ;
24b) présente au moins une unité d'adhérence (28a ; 28b) laquelle est ménagée pour fixer l'unité de plaque de cuisson (16a, 18a, 20a ; 16b, 18b, 20b) sur la plaque de recouvrement (14a, 14b) dans au moins une direction (26a ; 26b) parallèle à un plan d'étendue principal de la plaque de recouvrement (14a ; 14b) au moyen d'une adhérence.

7. Système selon la revendication 6, **caractérisé en ce que** l'unité d'adhérence (28a) comprend au moins un élément à aimant (30a).

8. Système selon la revendication 6 ou 7, **caractérisé en ce que** l'unité d'adhérence (28b) présente au moins un élément d'adhérence par friction (32b).

9. Système selon l'une quelconque des revendications précédentes, **caractérisé par** au moins une unité d'étanchéité (34a ; 34b) laquelle est ménagée pour empêcher au moins largement une pénétration d'humidité et/ou de salissure dans une partie située entre l'unité de plaque de cuisson (16a, 18a, 20a ; 16b, 18b, 20b) et la plaque de recouvrement (14a ; 14b).

10. Plaque de cuisson (10a ; 10b) d'un système selon l'une quelconque des revendications 1 à 9.
